# EUROPÄISCHE PATENTSCHRIFT

(11) **EP 3 041 725 B1**
(45) Veröffentlichungstag und Bekanntmachung des Hinweises auf die Patenterteilung: **13.07.2022**
(21) Anmeldenummer: 14755684.9
(22) Anmeldetag: 27.08.2014
(51) Int. Cl.: B60W 30/12, B60W 40/06, B60W 50/14

(54) **VERFAHREN UND VORRICHTUNG ZUM BESTIMMEN EINES FAHRBAHNVERLAUFS EINER FAHRBAHN EINES FAHRZEUGS**
METHOD AND DEVICE FOR DETERMINING A ROADWAY COURSE OF A ROADWAY OF A VEHICLE
PROCÉDÉ ET DISPOSITIF POUR DÉTERMINER LE TRACÉ D'UNE VOIE DE CIRCULATION D'UN VÉHICULE

(30) Priorität: 06.09.2013 DE 102013217860
(43) Veröffentlichungstag der Anmeldung: 13.07.2016
(73) Patentinhaber: Robert Bosch GmbH, 70442 Stuttgart (DE)
(72) Erfinder: WELLHOEFER, Matthias Marcus, 70499 Stuttgart (DE)
(86) Internationale Anmeldenummer: PCT/EP2014/068134
(87) Internationale Veröffentlichungsnummer: WO 2015/032663

(56) Entgegenhaltungen:
- DE-A1-102006 038 018
- DE-A1-102006 047 636
- DE-A1-102010 032 063
- US-A1- 2010 238 283
- US-A1- 2012 226 392

## Beschreibung

### Stand der Technik

Die vorliegende Erfindung bezieht sich auf ein Verfahren zum Bestimmen eines Fahrbahnverlaufs einer Fahrbahn eines Fahrzeugs, auf eine entsprechende Vorrichtung sowie auf ein entsprechendes Computerprogrammprodukt.

Heutige Fahrzeuge können mit Spurhaltesystemen und Spurwarnsystemen ausgestattet sein. Solche Systeme sind für Lkws bereits gesetzmäßig vorgeschrieben. Dabei kann über eine Kamera ein Bild eines Umfelds eines Fahrzeugs erfasst werden. Durch eine Bildanalyse können beispielsweise ein Horizont und Spurbegrenzungen einer Fahrbahn des Fahrzeugs ermittelt werden.

Die DE 10 2006 047 636 A1 beschreibt ein Verfahren zur Steuerung eines Fahrerassistenzsystems, bei dem ein Fahrzeug auf einer unter Verwendung einer Gierrate oder eines Lenkwinkels ermittelten hypothetischen Fahrspur von einer Start- in eine Zielspur geführt wird.

Die DE 10 2006 038 018 A1 beschreibt ein Verfahren zur Ermittlung eines Fahrspurverlaufs unter Verwendung von aus Navigationsdaten ermittelten Spurinformationen eines Fremdfahrzeugs.

Die DE 10 2010 032 063 A1 beschreibt ein radar- und kameradatenbasiertes Verfahren zur Ermittlung eines Fahrspurverlaufs.

### Offenbarung der Erfindung

Die US 2012/226392 A1 und die US 2010/238283 A1 beschreiben ein Verfahren bei dem im Falle einer fehlenden Fahrspurmarkierung eine virtuelle Linie anhand einer Breite einer Straßenbreite und zuvor erkannter Fahrspurmarkierungen bestimmt wird.

Vor diesem Hintergrund werden mit der vorliegenden Erfindung ein Verfahren und eine Vorrichtung zum Bestimmen eines Fahrbahnverlaufs einer Fahrbahn eines Fahrzeugs sowie ein entsprechendes Computerprogrammprodukt gemäß den Hauptansprüchen vorgestellt. Vorteilhafte Ausgestaltungen ergeben sich aus den jeweiligen Unteransprüchen und der nachfolgenden Beschreibung.

Der vorliegende Ansatz beruht auf der Erkenntnis, dass mittels eines Spurhaltesystems ein Fahrbahnverlauf einer Fahrbahn unter Verwendung einer Fahrbahnmarkierung ermittelt werden kann. Ist nun aber die Fahrbahnmarkierung verschmutzt, verformt oder teilweise nicht vorhanden, so kann ein unter Verwendung dieser Fahrbahnmarkierung ermittelter Fahrbahnverlauf von einem tatsächlichen Fahrbahnverlauf abweichen. Vorteilhafterweise können solche Abweichungen vermieden werden, indem das Spurhaltesystem ausgebildet ist, um zwischen intakten und beschädigten Fahrbahnmarkierungen zu unterscheiden. Dazu kann das Spurhaltesystem einen jeweiligen Verlauf zweier Fahrbahnmarkierungen der Fahrbahn erfassen. Wird nun einer der Verläufe als intakt erkannt, so kann dieser Verlauf verwendet werden, um den Fahrbahnverlauf zu ermitteln. Das Spurhaltesystem weist somit eine sehr hohe Robustheit gegenüber unterschiedlichen Fahrbahnzuständen auf. Dadurch kann auch ein Unfallrisiko gesenkt werden.

Es wird ein Verfahren zum Bestimmen eines Fahrbahnverlaufs einer Fahrbahn eines Fahrzeugs vorgestellt, wobei das Verfahren folgende Schritte umfasst:
Erfassen eines ersten Markierungsverlaufs einer ersten Fahrbahnmarkierung der Fahrbahn und eines zweiten Markierungsverlaufs einer zweiten Fahrbahnmarkierung der Fahrbahn;
Überprüfen des ersten Markierungsverlaufs und des zweiten Markierungsverlaufs auf Plausibilität, um einen plausiblen Markierungsverlauf zu bestimmen; und
Bestimmen des Fahrbahnverlaufs unter Verwendung einer bisherigen Fahrbahnbreite der Fahrbahn und eines plausiblen Markierungsverlaufs, wenn sich im Schritt des Überprüfens zumindest ein Markierungsverlauf als unplausibel erweist.

Unter einem Fahrbahnverlauf kann beispielsweise ein gerader oder kurvenförmiger Verlauf einer Fahrbahn verstanden werden. Bei einer Fahrbahn kann es sich um eine Fahrspur eines Fahrzeugs, etwa auf einer Straße oder Autobahn, handeln. Unter einem Fahrzeug kann ein Kraftfahrzeug wie beispielsweise ein Pkw, Lkw, Bus oder Baustellenfahrzeug verstanden werden. Ein Fahrbahnverlauf der Fahrbahn kann durch entsprechende Fahrbahnmarkierungen kenntlich gemacht sein. Die Fahrbahnmarkierungen können beispielsweise entlang der Fahrbahn verlaufen und eine Fahrbahnbreite der Fahrbahn markieren. Hierbei können die Fahrbahnmarkierungen etwa einen durchgehenden oder unterbrochenen Markierungsverlauf aufweisen. Die Fahrbahnmarkierungen können ferner einen unregelmäßigen Markierungsverlauf aufweisen, etwa aufgrund von Abnutzung oder Fahrbahnbeschädigungen. Unter einer Plausibilität eines Markierungsverlaufs kann ein Grad der Übereinstimmung eines erfassten Markierungsverlaufs mit einem vorgegebenen Markierungsverlauf verstanden werden. Ein Markierungsverlauf kann sich als unplausibel erweisen, wenn der Grad der Übereinstimmung zu gering ist. In diesem Fall wird ein als plausibel erkannter Markierungsverlauf verwendet, um den Fahrbahnverlauf zu bestimmen. Ferner wird bei der Bestimmung des Fahrbahnverlaufs eine bisherige Fahrbahnbreite berücksichtigt. Unter einer bisherigen Fahrbahnbreite kann eine zuletzt gespeicherte Information bezüglich der Fahrbahnbreite verstanden werden. Beispielsweise kann die Fahrbahnbreite anhand eines gegenseitigen Abstands der Markierungsverläufe ermittelt werden. Der Fahrbahnverlauf kann beispielsweise in Form einer Information bezüglich einer Fahrbahnmitte oder, insbesondere in Kurven, einer Ideallinie der Fahrbahn bestimmt werden.

Mittels des beschriebenen Ansatzes können Spurhaltesysteme, insbesondere bei Baustellen, verbessert werden, wenn die Spurmarkierungen etwa durch einen schlingernden Lkw verformt werden und nicht mehr dem Originalzustand entsprechen. Beispielsweise verlaufen die Spurmarkierungen dann kurvenförmig oder fehlen ganz.

Dazu kann die Erfassung und kontinuierliche Überwachung einer Spurbreite sowie eines Verlaufs beider einzelner Spurränder erfolgen. Ferner kann eine Änderung eines Algorithmus zur Bestimmung einer Spurmitte und einer Ideallinie bei einer veränderten oder fehlenden Spurmarkierung durchgeführt werden.

Der beschriebene Ansatz bietet den Vorteil einer Anpassung des Spurhaltesystems an unterschiedliche Situationen und damit einer erhöhten Sicherheit bei Spurhaltesystemen.

Gemäß einer Ausführungsform des vorliegenden Ansatzes kann im Schritt des Erfassens ferner die bisherige Fahrbahnbreite erfasst werden. Hierbei kann die bisherige Fahrbahnbreite von einem Abstand zwischen der ersten Fahrbahnmarkierung und der zweiten Fahrbahnmarkierung abhängig sein. Unter Verwendung der bisherigen Fahrbahnbreite kann der Fahrbahnverlauf mit sehr hoher Genauigkeit und Zuverlässigkeit bestimmt werden.

Des Weiteren wird im Schritt des Erfassens ein weiterer Markierungsverlauf einer weiteren Fahrbahnmarkierung einer an die Fahrbahn angrenzenden weiteren Fahrbahn erfasst. Hierbei wird im Schritt des Überprüfens ferner der weitere Markierungsverlauf auf Plausibilität überprüft. Im Schritt des Bestimmens wird der Fahrbahnverlauf ferner unter Verwendung des weiteren Markierungsverlaufs bestimmt, wenn sich im Schritt des Überprüfens der weitere Markierungsverlauf als plausibel erweist. Dies hat den Vorteil, dass der Fahrbahnverkauf unter Verwendung des weiteren Markierungsverlaufs auch dann bestimmt werden kann, wenn sich im Schritt des Überprüfens sowohl der erste als auch der zweite Markierungsverlauf als unplausibel erweisen, etwa weil beide Markierungsverläufe nicht vorhanden sind. Im Schritt des Erfassens kann ferner eine weitere Fahrbahnbreite der weiteren Fahrbahn erfasst werden. Hierbei kann die weitere Fahrbahnbreite von einem Abstand zwischen der weiteren Fahrbahnmarkierung und einer der Fahrbahnmarkierungen der Fahrbahn abhängig sein. Im Schritt des Bestimmens kann der Fahrbahnverlauf ferner unter Verwendung der weiteren Fahrbahnbreite bestimmt werden. Durch diese Ausführungsform kann die Genauigkeit und Zuverlässigkeit des Verfahrens weiter erhöht werden.

Zudem kann im Schritt des Erfassens ferner eine Referenzposition eines weiteren Fahrzeugs bezüglich der Fahrbahn und/oder des Fahrzeugs erfasst werden. Dabei kann im Schritt des Bestimmens der Fahrbahnverlauf ferner unter Verwendung der Referenzposition bestimmt werden. Unter einer Referenzposition kann eine Position eines weiteren Fahrzeugs verstanden werden, aus der Rückschlüsse auf einen möglichen Fahrbahnverlauf gezogen werden können. Unter einem weiteren Fahrzeug kann ein in einem Umfeld des Fahrzeugs befindliches Fahrzeug verstanden werden. Insbesondere kann es sich bei dem weiteren Fahrzeug um ein dem Fahrzeug vorausfahrendes Fahrzeug handeln. Vorteilhafterweise kann unter Verwendung der Referenzposition der Fahrbahnverlauf unabhängig von den Markierungsverläufen bestimmt werden. Dadurch kann eine hohe Robustheit des Verfahrens erreicht werden.

Das Verfahren kann einen Schritt des Bereitstellens eines Warnsignals umfassen, um einen Fahrer des Fahrzeugs vor einer Unfallgefahr zu warnen, wenn sich im Schritt des Überprüfens zumindest ein Markierungsverlauf als unplausibel erweist oder wenn der Schritt des Bestimmens ausgeführt wird. Mittels des Warnsignals kann der Fahrer rechtzeitig auf die Unfallgefahr hingewiesen werden. Somit kann eine Sicherheit des Fahrers zusätzlich erhöht werden.

Ferner kann das Verfahren einen Schritt des Ausgebens eines Empfehlungssignals umfassen, um dem Fahrer einen Fahrbahnwechsel zu empfehlen, wenn sich im Schritt des Überprüfens zumindest ein Markierungsverlauf als unplausibel erweist oder wenn der Schritt des Bestimmens ausgeführt wird. Auch dadurch kann die Sicherheit des Fahrers mit einfachen und kostengünstig bereitzustellenden Mitteln erhöht werden. Gemäß einer weiteren Ausführungsform des vorliegenden Ansatzes kann das Verfahren einen Schritt des Reduzierens einer Geschwindigkeit des Fahrzeugs umfassen, wenn sich im Schritt des Überprüfens zumindest ein Markierungsverlauf als unplausibel erweist oder wenn der Schritt des Bestimmens ausgeführt wird. Durch eine Reduktion der Geschwindigkeit kann eine Reaktionszeit des Fahrers deutlich verlängert und somit ein Unfallrisiko gesenkt werden.

Des Weiteren wird im Schritt des Erfassens ferner eine Oberflächenstruktur der Fahrbahn erfasst, um einen befahrbahren Bereich der Fahrbahn zu ermitteln. Hierbei wird im Schritt des Bestimmens der Fahrbahnverlauf ferner unter Verwendung des befahrbaren Bereichs bestimmt. Unter einer Oberflächenstruktur kann eine Struktur eines befahrbaren Belags der Fahrbahn verstanden werden. Bei der Oberflächenstruktur kann es sich beispielsweise um eine Textur eines Asphalts der Fahrbahn handeln. Beispielsweise kann die Oberflächenstruktur der Fahrbahn verwendet werden, um die Fahrbahn von einem nicht befestigten Randbereich mit einer anderen Oberflächenstruktur zu unterscheiden. Auch diese Ausführungsform bietet den sicherheitserhöhenden Vorteil einer von den Markierungsverläufen unabhängigen Bestimmung des Fahrbahnverlaufs.

Der vorliegende Ansatz schafft schließlich eine Vorrichtung zum Bestimmen eines Fahrbahnverlaufs einer Fahrbahn eines Fahrzeugs, wobei die Vorrichtung folgende Merkmale aufweist:
eine Einheit zum Erfassen eines ersten Markierungsverlaufs einer ersten Fahrbahnmarkierung der Fahrbahn und eines zweiten Markierungsverlaufs einer zweiten Fahrbahnmarkierung der Fahrbahn;
eine Einheit zum Überprüfen des ersten Markierungsverlaufs und des zweiten Markierungsverlaufs auf Plausibilität , um einen plausiblen Markierungsverlauf zu bestimmen; und
eine Einheit zum Bestimmen des Fahrbahnverlaufs unter Verwendung einer bisherigen Fahrbahnbreite der Fahrbahn und eines plausiblen Markierungsverlaufs, wenn sich zumindest ein Markierungsverlauf als unplausibel erweist.

Die Einheit zum Erfassen ist ferner ausgebildet, einen weiteren Markierungsverlauf einer weiteren Fahrbahnmarkierung einer an die Fahrbahn angrenzenden weiteren Fahrbahn zu erfassen. Des weiteren ist die Einheit zum Erfassen ausgebildet, eine Oberflächenstruktur der Fahrbahn zu erfassen, um einen befahrbahren Bereich der Fahrbahn zu ermitteln.

Die Einheit zum Überprüfen ist ferner ausgebildet, um den weiteren Markierungsverlauf auf Plausibilität zu überprüfen.

Die Einheit zum Bestimmen ist ferner ausgebildet, um den Fahrbahnverlauf ferner unter Verwendung des weiteren Markierungsverlaufs zu bestimmen, wenn sich im Schritt des Überprüfens der weitere Markierungsverlauf als plausibel erweist und den Fahrbahnverlauf ferner unter Verwendung des befahrbaren Bereichs zu bestimmen.

Unter einer Vorrichtung kann vorliegend ein elektrisches Gerät verstanden werden, das Sensorsignale verarbeitet und in Abhängigkeit davon Steuer- und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind. Durch diese Ausführungsvariante der Erfindung in Form einer Vorrichtung kann die der Erfindung zugrunde liegende Aufgabe schnell und effizient gelöst werden.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert sein kann und zur Durchführung des Verfahrens nach einer der vorstehend beschriebenen Ausführungsformen verwendet wird, wenn das Programmprodukt auf einem Computer oder einer Vorrichtung ausgeführt wird.

Die Erfindung wird nachstehend anhand der beigefügten Zeichnungen beispielhaft näher erläutert. Es zeigen:
- Fig. 1: eine schematische Darstellung einer Fahrbahnerkennungssituation gemäß einem Ausführungsbeispiel der vorliegenden Erfindung;
- Fig. 2: eine schematische Darstellung einer Vorrichtung zum Bestimmen eines Fahrbahnverlaufs gemäß einem Ausführungsbeispiel der vorliegenden Erfindung; und
- Fig. 3: ein Ablaufdiagramm eines Verfahrens zum Bestimmen eines Fahrbahnverlaufs gemäß einem Ausführungsbeispiel der vorliegenden Erfindung.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

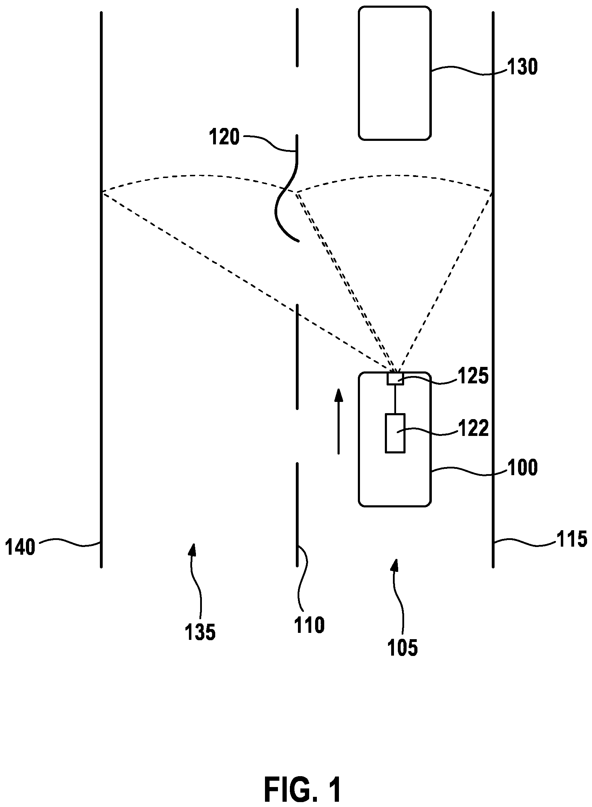

Fig. 1 zeigt eine schematische Darstellung einer Fahrbahnerkennungssituation gemäß einem Ausführungsbeispiel der vorliegenden Erfindung. Ein Fahrzeug 100 befindet sich auf einer Fahrbahn 105. Die Fahrbahn 105 weist einen geradlinigen Fahrbahnverlauf auf. Eine Breite der Fahrbahn 105 ist durch eine erste Fahrbahnmarkierung 110 und eine zweite Fahrbahnmarkierung 115 begrenzt. Die Fahrbahnmarkierungen 110, 115 verlaufen je geradlinig entlang der Fahrbahn 105. Ferner weist die erste Fahrbahnmarkierung 105 einen durchgehenden Verlauf und die zweite Fahrbahnmarkierung 110 einen regelmäßig unterbrochenen Verlauf auf. In einer Fahrtrichtung des Fahrzeugs 100 gesehen, ist die erste Fahrbahnmarkierung 110 links des Fahrzeugs 100 und die zweite Fahrbahnmarkierung 115 rechts des Fahrzeugs 100 angeordnet. Die Fahrtrichtung ist in Fig. 1 mit einem Pfeil dargestellt.

Die erste Fahrbahnmarkierung 110 weist in einem in einem Vorfeld des Fahrzeugs 100 befindlichen Bereich einen beschädigten Markierungsstreifen 120 auf. Der Markierungsstreifen 120 verläuft hierbei kurvenförmig.

Das Fahrzeug 100 umfasst eine Vorrichtung 122, die ausgebildet ist, um den beschädigten Markierungsstreifen 120 zu erkennen und den Fahrbahnverlauf der Fahrbahn 105, beispielsweise anhand des Verlaufs der unbeschädigten Fahrbahnmarkierung 115 zu bestimmen.

Um die jeweiligen Verläufe der Fahrbahnmarkierungen 110, 115 zu erfassen, ist das Fahrzeug 100 beispielsweise mit einem Umfeldsensor 125 ausgestattet. Der Umfeldsensor 125 ist mit der Vorrichtung 192 verbunden und beispielhaft im Bereich eines Vorderendes des Fahrzeugs 100 eingezeichnet. Der Umfeldsensor 125 ist ferner auf das Vorfeld des Fahrzeugs 100 gerichtet. Ein Erfassungsbereich des Umfeldsensors 125 ist in Fig. 1 mit gestrichelten Linien markiert.

Gemäß einem Ausführungsbeispiel der vorliegenden Erfindung ist die Vorrichtung 122 ausgebildet, um beispielsweise mittels des Umfeldsensors 125 eine Breite der Fahrbahn 105 zu erfassen, wobei die Breite einem Abstand zwischen den Fahrbahnmarkierungen 105, 115 entspricht. Der Fahrbahnverlauf kann dann durch die Vorrichtung 122 zusätzlich unter Verwendung der Breite bestimmt werden.

Vor dem Fahrzeug 100 befindet sich ferner ein weiteres Fahrzeug 130. Optional ist die Vorrichtung 192 ausgebildet, um eine Position des weiteren Fahrzeugs 130 bezüglich des Fahrzeugs 100 und/oder bezüglich der Fahrbahn 105 zu erfassen. Alternativ oder zusätzlich wird diese Position von der Vorrichtung 122 verwendet, um den Fahrbahnverlauf zu bestimmen.

An die Fahrbahn 105 grenzt eine weitere Fahrbahn 135 an. Die weitere Fahrbahn 135 ist durch eine weitere Fahrbahnmarkierung 140 begrenzt, wobei die erste Fahrbahnmarkierung 110 als Mittelstreifen zwischen der weiteren Fahrbahnmarkierung 140 und der zweiten Fahrbahnmarkierung 115 angeordnet ist. Die weitere Fahrbahnmarkierung 140 verläuft parallel zu den Fahrbahnmarkierungen 110, 115 und weist wie die zweite Fahrbahnmarkierung 115 einen durchgehenden Verlauf auf.

Gemäß einem weiteren Ausführungsbeispiel der vorliegenden Erfindung ist die Vorrichtung 122 ausgebildet, um den Fahrbahnverlauf unter Verwendung eines Verlaufs der weiteren Fahrbahnmarkierung 140 zu bestimmen. Beispielsweise wird hierbei die weitere Fahrbahnmarkierung 140 durch den Umfeldsensor 125 erfasst. Hierzu weist der Umfeldsensor 125 einen entsprechenden weiteren Erfassungsbereich auf. Der weitere Erfassungsbereich ist ebenfalls mit gestrichelten Linien markiert.

Gemäß einem weiteren Ausführungsbeispiel wird mittels des Umfeldsensors 125 eine Breite der weiteren Fahrbahn 135 erfasst, wobei die Breite der weiteren Fahrbahn von einem Abstand zwischen der weiteren Fahrbahnmarkierung 140 und der ersten Fahrbahnmarkierung 110 begrenzt ist. Die Breite der weiteren Fahrbahn 135 wird von der Vorrichtung 122 alternativ oder zusätzlich verwendet, um den Fahrbahnverlauf der Fahrbahn 105 zu bestimmen.

Ein Ausführungsbeispiel der vorliegenden Erfindung sieht vor, kontinuierlich einen Abstand zwischen den zwei Fahrspurbegrenzungen 110, 115, auch Fahrspurmarkierungen, Fahrbahnmarkierungen, Seitenmarkierungen oder Markierungen 110, 115, 140 genannt, anhand eines Videobilds zu bestimmen und zu verfolgen.

Optional werden in einer weiteren Ausbaustufe eine Vermessung und eine Überwachung eines Spurbreitenverlaufs benachbarter Spuren wie der weiteren Fahrbahn 135 mit erfasst.

Neben der Erfassung der Spurbreiten wird der Verlauf der Fahrspurmarkierungen 110, 115 rechts und links separat verfolgt und über eine Interpolation abschnittsweise begradigt. Wird bei der Überwachung erkannt, dass eine Markierung einen unplausiblen Verlauf aufweist, beispielsweise wenn plötzliche, kurze Rechts-links-Schwankungen, ein Abriss und/oder ein Haken auftreten, während eine andere Markierung weiterhin gerade verläuft, so orientiert sich der Spurhalteassistent, etwa in Form der Vorrichtung 122, ausschließlich an der Markierung mit dem intakten Verlauf. Zur richtigen Positionierung wird die letzte bestimmte Spurbreite verwendet, bis die andere Seitenmarkierung wieder einen plausiblen Verlauf aufweist. Danach wird die Überwachung und Bestimmung der Spurbreite fortgesetzt. Fehlt beispielsweise in einer Baustelle die rechte Fahrbahnmarkierung 115 komplett, etwa weil ein Lkw von der Fahrbahn 105 abgekommen ist und dabei die Markierung 115 beseitigt hat, so wird wie oben verfahren, d. h., die Orientierung erfolgt anhand der intakten Markierung.

Fehlen beide Markierungen 110, 115, so erfolgt die Orientierung anhand der benachbarten (noch intakten) Markierungen (in Fig. 1 anhand der weiteren Markierung 140).

Gegebenenfalls wird eine Spurwechselempfehlung an den Fahrer ausgegeben.

Bei vorausfahrendem Verkehr kann ein vorausfahrendes Fahrzeug, in Fig. 1 beispielhaft als weiteres Fahrzeug 130 gezeigt, über eine Umfeldsensorik wie dem Umfeldsensor 125 als zusätzliche Orientierungshilfe mit einbezogen werden.

Weist der Videoprozessor eine sehr hohe Rechenleistung auf, so kann zusätzlich zu den oben beschriebenen Funktionen eine Analyse verschiedener Texturen der Fahrbahn 105 durchgeführt werden. Mithilfe einer Texturanalyse kann im Bild erkannt werden, wo der Fahrbahnbelag endet und wo beispielsweise Matsch oder Wiese (offener Boden) anfängt. Dies kann dann als zusätzliche Orientierungshilfe in die Spurpositionierung mit einfließen.

Sobald die Funktion greift, mindestens aber wenn beide Spurmarkierungen 110, 115 fehlen, sollte der Fahrer zusätzlich gewarnt werden, da dann ein erhöhtes Unfallrisiko besteht.

Optional kann in diesem Fall automatisch die Geschwindigkeit um beispielsweise 20 Prozent reduziert werden.

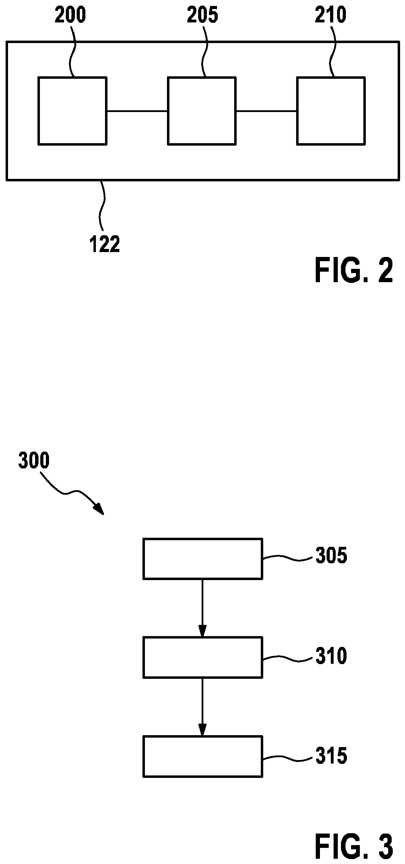

Fig. 2 zeigt eine schematische Darstellung einer Vorrichtung zum Bestimmen eines Fahrbahnverlaufs gemäß einem Ausführungsbeispiel der vorliegenden Erfindung. Bei der Vorrichtung handelt es sich beispielsweise um die in Fig. 1 gezeigte Vorrichtung 122. Die Vorrichtung 122 weist eine Einheit 200 zum Erfassen eines ersten Markierungsverlaufs einer ersten Fahrbahnmarkierung der Fahrbahn und eines zweiten Markierungsverlaufs einer zweiten Fahrbahnmarkierung der Fahrbahn, beispielsweise der in Fig. 1 gezeigten Fahrbahn auf. Die Einheit 200 ist mit einer Einheit 205 zum Überprüfen des ersten Markierungsverlaufs und des zweiten Markierungsverlaufs auf Plausibilität verbunden. Des Weiteren ist die Einheit 205 mit einer Einheit 210 verbunden. Die Einheit 210 ist ausgebildet, um den Fahrbahnverlauf unter Verwendung einer bisherigen Fahrbahnbreite und eines plausiblen Markierungsverlaufs zu bestimmen, wenn sich zumindest ein Markierungsverlauf als unplausibel erweist. Beispielsweise handelt es sich bei dem unplausiblen Markierungsverlauf um den durch die Markierungsstelle 120 beeinträchtigten Verlauf der ersten Fahrbahnmarkierung 110.

Optional ist die Vorrichtung 122 ausgebildet, um ein Warnsignal zum Ausgeben einer Warnmeldung an einen Fahrer des Fahrzeugs 100 und/oder ein Empfehlungssignal zum Ausgeben einer Spurwechselempfehlung an den Fahrer bereitzustellen, wenn durch die Einheit 205 der Verlauf der ersten Fahrbahnmarkierung 110 als unplausibel erkannt wird oder wenn die Einheit 210 aktiviert ist.

Gemäß einem Ausführungsbeispiel ist die Vorrichtung 122 ausgebildet, um eine Geschwindigkeit des Fahrzeugs 100 zu reduzieren, wenn durch die Einheit 205 der Verlauf der ersten Fahrbahnmarkierung 110 als unplausibel erkannt wird oder wenn die Einheit 210 aktiviert ist.

Fig. 3 zeigt ein Ablaufdiagramm eines Verfahrens 300 zum Bestimmen eines Fahrbahnverlaufs gemäß einem Ausführungsbeispiel der vorliegenden Erfindung. In einem Schritt 305 werden zunächst ein erster Markierungsverlauf einer ersten Fahrbahnmarkierung einer Fahrbahn und ein zweiter Markierungsverlauf einer zweiten Fahrbahnmarkierung der Fahrbahn erfasst. Anschließend erfolgt ein Schritt 310 des Überprüfens des ersten Markierungsverlaufs und des zweiten Markierungsverlaufs auf Plausibilität. In einem weiteren Schritt 310 wird der Fahrbahnverlauf unter Verwendung einer bisherigen Fahrbahnbreite der Fahrbahn und eines plausiblen Markierungsverlaufs bestimmt, wenn sich im Schritt des Überprüfens zumindest ein Markierungsverlauf als unplausibel erweist.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden.

Ferner können erfindungsgemäße Verfahrensschritte wiederholt sowie in einer anderen als in der beschriebenen Reihenfolge ausgeführt werden.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren (300) zum Bestimmen eines Fahrbahnverlaufs einer Fahrbahn (105) eines Fahrzeugs (100), wobei das Verfahren (300) folgende Schritte umfasst:
Erfassen (305) eines ersten Markierungsverlaufs einer ersten Fahrbahnmarkierung (110) der Fahrbahn (105) und eines zweiten Markierungsverlaufs einer zweiten Fahrbahnmarkierung (115) der Fahrbahn (105);
Überprüfen (310) des ersten Markierungsverlaufs und des zweiten Markierungsverlaufs auf Plausibilität, um einen plausiblen Markierungsverlauf zu bestimmen; und
Bestimmen (315) des Fahrbahnverlaufs unter Verwendung einer bisherigen Fahrbahnbreite der Fahrbahn (105) und des plausiblen Markierungsverlaufs, wenn sich im Schritt des Überprüfens (310) ein Markierungsverlauf als nicht plausibel erweist,
**dadurch gekennzeichnet, dass**
im Schritt des Erfassens (305) ferner ein weiterer Markierungsverlauf einer weiteren Fahrbahnmarkierung (140) einer an die Fahrbahn (105) angrenzenden weiteren Fahrbahn (135) und eine Oberflächenstruktur der Fahrbahn (105) erfasst wird, wobei die Oberflächenstruktur der Fahrbahn erfasst wird, um einen befahrbahren Bereich der Fahrbahn (105) zu ermitteln;
im Schritt des Überprüfens (310) ferner der weitere Markierungsverlauf auf Plausibilität überprüft wird; und
im Schritt des Bestimmens (305) der Fahrbahnverlauf ferner unter Verwendung des weiteren Markierungsverlaufs bestimmt wird, wenn sich im Schritt des Überprüfens (310) der weitere Markierungsverlauf als plausibel erweist und der Fahrbahnverlauf ferner unter Verwendung des befahrbaren Bereichs bestimmt wird.

2. Verfahren (300) gemäß Anspruch 1, bei dem im Schritt des Erfassens (305) ferner die bisherige Fahrbahnbreite erfasst wird, wobei die bisherige Fahrbahnbreite von einem Abstand zwischen der ersten Fahrbahnmarkierung (110) und der zweiten Fahrbahnmarkierung (115) abhängig ist.

3. Verfahren (300) gemäß einem der vorangegangenen Ansprüche, bei dem im Schritt des Erfassens (305) ferner eine weitere Fahrbahnbreite der weiteren Fahrbahn (135) erfasst wird, wobei die weitere Fahrbahnbreite von einem Abstand zwischen der weiteren Fahrbahnmarkierung (140) und einer der Fahrbahnmarkierungen (110, 115) der Fahrbahn (105) abhängig ist, wobei im Schritt des Bestimmens (315) der Fahrbahnverlauf ferner unter Verwendung der weiteren Fahrbahnbreite bestimmt wird.

4. Verfahren (300) gemäß einem der vorangegangenen Ansprüche, bei dem im Schritt des Erfassens (305) ferner eine Referenzposition eines weiteren Fahrzeugs (130) bezüglich der Fahrbahn (105) und/oder des Fahrzeugs (100) erfasst wird, wobei im Schritt des Bestimmens (315) der Fahrbahnverlauf ferner unter Verwendung der Referenzposition bestimmt wird.

5. Verfahren (300) gemäß einem der vorangegangenen Ansprüche, mit einem Schritt des Bereitstellens eines Warnsignals, um einen Fahrer des Fahrzeugs (100) vor einer Unfallgefahr zu warnen, wenn sich im Schritt des Überprüfens (310) zumindest ein Markierungsverlauf als unplausibel erweist oder wenn der Schritt des Bestimmens (315) ausgeführt wird.

6. Verfahren (300) gemäß einem der vorangegangenen Ansprüche, mit einem Schritt des Ausgebens eines Empfehlungssignals, um dem Fahrer einen Fahrbahnwechsel zu empfehlen, wenn sich im Schritt des Überprüfens (310) zumindest ein Markierungsverlauf als unplausibel erweist oder wenn der Schritt des Bestimmens (315) ausgeführt wird.

7. Verfahren (300) gemäß einem der vorangegangenen Ansprüche, mit einem Schritt des Reduzierens einer Geschwindigkeit des Fahrzeugs (100), wenn sich im Schritt des Überprüfens (310) zumindest ein Markierungsverlauf als unplausibel erweist oder wenn der Schritt des Bestimmens (315) ausgeführt wird.

8. Vorrichtung (122) zum Bestimmen eines Fahrbahnverlaufs einer Fahrbahn (105) eines Fahrzeugs (100), wobei die Vorrichtung (122) folgende Merkmale aufweist:
eine Einheit (200) zum Erfassen eines ersten Markierungsverlaufs einer ersten Fahrbahnmarkierung (110) der Fahrbahn (105) und eines zweiten Markierungsverlaufs einer zweiten Fahrbahnmarkierung (115) der Fahrbahn (105);
eine Einheit (205) zum Überprüfen des ersten Markierungsverlaufs und des zweiten Markierungsverlaufs auf Plausibilität, um einen plausiblen Markierungsverlauf zu bestimmen; und
eine Einheit (210) zum Bestimmen des Fahrbahnverlaufs unter Verwendung einer bisherigen Fahrbahnbreite der Fahrbahn (105) und des plausiblen Markierungsverlaufs, wenn sich ein Markierungsverlauf als nicht plausibel erweist
**dadurch gekennzeichnet, dass**
die Einheit (200) zum Erfassen ferner ausgebildet ist, einen weiteren Markierungsverlauf einer weiteren Fahrbahnmarkierung (140) einer an die Fahrbahn (105) angrenzenden weiteren Fahrbahn (135) und eine Oberflächenstruktur der Fahrbahn (105) zu erfassen, wobei die Oberflächenstruktur der Fahrbahn erfasst wird, um einen befahrbahren Bereich der Fahrbahn (105) zu ermitteln;
die Einheit (205) zum Überprüfen (310) ferner ausgebildet ist, um den weiteren Markierungsverlauf auf Plausibilität zu überprüfen; und
die Einheit (210) zum Bestimmen ferner ausgebildet ist, um den Fahrbahnverlauf ferner unter Verwendung des weiteren Markierungsverlaufs zu bestimmen, wenn sich im Schritt des Überprüfens (310) der weitere Markierungsverlauf als plausibel erweist und den Fahrbahnverlauf ferner unter Verwendung des befahrbaren Bereichs zu bestimmen.

9. Computerprogrammprodukt mit Programmcode zur Durchführung des Verfahrens (300) nach einem der Ansprüche 1 bis 7, wenn das Programmprodukt auf einer Vorrichtung nach Anspruch 8 (122) ausgeführt wird

## Claims

1. Method (300) for determining a lane course of a lane (105) of a vehicle (100), the method (300) comprising the following steps:
detecting (305) a first marking course of a first lane marking (110) of the lane (105) and a second marking course of a second lane marking (115) of the lane (105);
checking (310) the first marking course and the second marking course for plausibility in order to determine a plausible marking course; and
determining (315) the lane course by using a previous lane width of the lane (105) and the plausible marking course if a marking course proves not to be plausible in the checking step (310),
**characterized in that**
in the detecting step (305), a further marking course of a further lane marking (140) of a further lane (135) adjacent to the lane (105) and a surface structure of the lane (105) are detected, the surface structure of the lane being detected in order to ascertain a passable area of the lane (105);
in the checking step (310), the further marking course is also checked for plausibility; and
in the determining step (305), the lane course is also determined by using the further marking course if the further marking course proves to be plausible in the checking step (310) and the lane course is also determined by using the passable area.

2. Method (300) according to Claim 1, in which the previous lane width is also detected in the detecting step (305), the previous lane width being dependent on a distance between the first lane marking (110) and the second lane marking (115).

3. Method (300) according to one of the preceding claims, in which a further lane width of the further lane (135) is also detected in the detecting step (305), the further lane width being dependent on a distance between the further lane marking (140) and one of the lane markings (110, 115) of the lane (105), the lane course also being determined in the determining step (315) by using the further lane width.

4. Method (300) according to one of the preceding claims, in which a reference position of a further vehicle (130) with respect to the lane (105) and/or the vehicle (100) is also detected in the detecting step (305), the lane course also being determined in the determining step (315) by using the reference position.

5. Method (300) according to one of the preceding claims, comprising a step of providing a warning signal in order to warn a driver of the vehicle (100) of a risk of accident if at least one marking course proves to be implausible in the checking step (310) or if the determining step (315) is performed.

6. Method (300) according to one of the preceding claims, comprising a step of issuing a recommendation signal in order to recommend to the driver a change of lane if at least one marking course proves to be implausible in the checking step (310) or if the determining step (315) is performed.

7. Method (300) according to one of the preceding claims, comprising a step of reducing a speed of the vehicle (100) if at least one marking course proves to be implausible in the checking step (310) or if the determining step (315) is performed.

8. Device (122) for determining a lane course of a lane (105) of a vehicle (100), the device (122) having the following features:
a unit (200) for detecting a first marking course of a first lane marking (110) of the lane (105) and a second marking course of a second lane marking (115) of the lane (105);
a unit (205) for checking the first marking course and the second marking course for plausibility in order to determine a plausible marking course; and
a unit (210) for determining the lane course by using a previous lane width of the lane (105) and the plausible marking course if a marking course proves not to be plausible,
**characterized in that**
the unit (200) for detecting is also designed to detect a further marking course of a further lane marking (140) of a further lane (135) adjacent to the lane (105) and a surface structure of the lane (105), the surface structure of the lane being detected in order to ascertain a passable area of the lane (105);
the unit (205) for checking (310) is also designed to check the further marking course for plausibility; and
the unit (210) for determining is also designed to determine the lane course also by using the further marking course if the further marking course proves to be plausible in the checking step (310) and also to determine the lane course by using the passable area.

9. Computer program product with program code for carrying out the method (300) according to one of Claims 1 to 7 when the program product is run on a device according to Claim 8 (122).

## Revendications

1. Procédé (300) permettant de déterminer un tracé de voie de circulation d'une voie de circulation (105) d'un véhicule (100), le procédé (300) comprenant les étapes suivantes consistant à :
détecter (305) un premier tracé de marquage d'un premier marquage de voie de circulation (110) de la voie de circulation (105) et un deuxième tracé de marquage d'un deuxième marquage de voie de circulation (115) de la voie de circulation (105) ;
soumettre (310) le premier tracé de marquage et le deuxième tracé de marquage à un contrôle de vraisemblance afin de déterminer un tracé de marquage vraisemblable ; et
déterminer (315) le tracé de voie de circulation en utilisant une largeur de voie de circulation précédente de la voie de circulation (105) et le tracé de marquage vraisemblable si à l'étape de contrôle (310) un tracé de marquage s'avère invraisemblable,
**caractérisé en ce qu'**à l'étape de détection (305) en outre un autre tracé de marquage d'un autre marquage de voie de circulation (140) d'une autre voie de circulation (135) adjacente à la voie de circulation (105) et une structure de surface de la voie de circulation (105) sont détectés, la structure de surface de la voie de circulation étant détectée pour établir une zone carrossable de la voie de circulation (105) ;
à l'étape de contrôle (310) en outre l'autre tracé de marquage est soumis à un contrôle de vraisemblance ; et
à l'étape de détermination (305) le tracé de voie de circulation est déterminé en utilisant en outre l'autre tracé de marquage si à l'étape de contrôle (310) l'autre tracé de marquage s'avère vraisemblable et le tracé de voie de circulation est en outre déterminé en utilisant la zone carrossable.

2. Procédé (300) selon la revendication 1, dans lequel à l'étape de détection (305) en outre la largeur de voie de circulation précédente est détectée, la largeur de voie de circulation précédente dépendant d'une distance entre le premier marquage de voie de circulation (110) et le deuxième marquage de voie de circulation (115).

3. Procédé (300) selon l'une quelconque des revendications précédentes, dans lequel à l'étape de détection (305) en outre une autre largeur de voie de circulation de l'autre voie de circulation (135) est détectée, l'autre largeur de voie de circulation dépendant d'une distance entre l'autre marquage de voie de circulation (140) et l'un des marquages de voie de circulation (110, 115) de la voie de circulation (105), dans lequel à l'étape de détermination (315) le tracé de voie de circulation est déterminé en outre en utilisant l'autre largeur de voie de circulation.

4. Procédé (300) selon l'une quelconque des revendications précédentes, dans lequel à l'étape de détection (305) en outre une position de référence d'un autre véhicule (130) par rapport à la voie de circulation (105) et/ou au véhicule (100) est détectée, dans lequel à l'étape de détermination (315) le tracé de voie de circulation est en outre déterminé en utilisant la position de référence.

5. Procédé (300) selon l'une quelconque des revendications précédentes, comprenant une étape consistant à fournir un signal d'avertissement afin d'avertir un conducteur du véhicule (100) d'un risque d'accident si à l'étape de contrôle (310) au moins un tracé de marquage s'avère invraisemblable ou si l'étape de détermination (315) est exécutée.

6. Procédé (300) selon l'une quelconque des revendications précédentes, comprenant une étape consistant à émettre un signal de recommandation afin de recommander au conducteur de changer de voie de circulation si à l'étape de contrôle (310) au moins un tracé de marquage s'avère invraisemblable ou si l'étape de détermination (315) est exécutée.

7. Procédé (300) selon l'une quelconque des revendications précédentes, comprenant une étape consistant à réduire une vitesse du véhicule (100) si à l'étape de contrôle (310) au moins un tracé de marquage s'avère invraisemblable ou si l'étape de détermination (315) est exécutée.

8. Dispositif (122) permettant de déterminer un tracé de voie de circulation d'une voie de circulation (105) d'un véhicule (100), le dispositif (122) présentant les particularités suivantes :
une unité (200) permettant de détecter un premier tracé de marquage d'un premier marquage de voie de circulation (110) de la voie de circulation (105) et un deuxième tracé de marquage d'un deuxième marquage de voie de circulation (115) de la voie de circulation (105) ;
une unité (205) permettant de soumettre le premier tracé de marquage et le deuxième tracé de marquage à un contrôle de vraisemblance afin de déterminer un tracé de marquage vraisemblable ; et
une unité (210) permettant de déterminer le tracé de voie de circulation en utilisant une largeur de voie de circulation précédente de la voie de circulation (105) et le tracé de marquage vraisemblable si un tracé de marquage s'avère invraisemblable,
**caractérisé en ce que** l'unité (200) de détection est en outre réalisée pour détecter un autre tracé de marquage d'un autre marquage de voie de circulation (140) d'une autre voie de circulation (135) adjacente à la voie de circulation (105) et une structure de surface de la voie de circulation (105), la structure de surface de la voie de circulation étant détectée pour établir une zone carrossable de la voie de circulation (105) ;
l'unité (205) de contrôle (310) est en outre réalisée pour soumettre l'autre tracé de marquage à un contrôle de vraisemblance ; et
l'unité (210) de détermination est en outre réalisée pour déterminer le tracé de voie de circulation en utilisant l'autre tracé de marquage si à l'étape de contrôle (310) l'autre tracé de marquage s'avère vraisemblable et pour déterminer le tracé de voie de circulation en outre en utilisant la zone carrossable.

9. Produit de programme informatique comprenant du code programme pour exécuter le procédé (300) selon l'une quelconque des revendications 1 à 7 si le produit de programme est exécuté sur un dispositif (122) selon la revendication 8.
